# EUROPEAN PATENT APPLICATION

(11) **EP 2 560 113 A1**
(43) Date of publication of application: **20.02.2013**
(21) Application number: 12180640.0
(22) Date of filing: 16.08.2012
(51) Int. Cl.: G06F 17/50

(54) **Method and system for modeling a power plant**

(30) Priority: 19.08.2011 US 201113213208
(71) Applicant: General Electric Company, Schenectady, NY 12345 (US)
(72) Inventor: Esakki, Lakshmanan, 560066 Bangalore (IN); Muthaiah, Veerappan, 560066 Bangalore (IN); Muthuramalingam, Mahendra, 560066 Bangalore (IN); Selvarajan, Thillairajan, 560066 Bangalore (IN)
(74) Representative: Picker, Madeline Margaret

(57) **Abstract**

A method (30) of modeling a power plant (2) including a plurality of major components (4) including at least one of a Heat recovery Steam Generator (HRSG) (12), a steam turbomachine, a condenser (14), and a cooling system includes establishing a desired power plant (2) output criteria, selecting a plurality of major components (4) to form the power plant (2), running a model module (42) to create thermodynamic model of the major components (4) to form a power plant (2) model, running an equation module (44) to develop a set of equations for the power plant (2) model, running a performance module (46) to solve the set of equations for the power plant (2) model, running a cost module (48) to determine a cost of the power plant (2) model, determining whether the power plant (2) model meets the desired power plant (2) output criteria, and generating a result that indicates the performance and cost of the power plant (2).

## Description

### BACKGROUND OF THE INVENTION

The subject matter disclosed herein relates to power plants and, more particularly, to a method and system for modeling a power plant.

Conventional power plants include numerous complex subsystems that work in cooperation to produce a power output. To assess performance of a power plant, each major component is analyzed. For example, models for a Heat Recovery Steam Generator (HRSG), Steam turbine, generator, condenser, and cooling system are analyzed to determine whether a desired output is possible. Selecting major components to meet a desired output requires numerous calculations that are often times too complex to account for all possible variables. Accordingly, preparing a power plant model to be analyzed can be a time consuming and costly process. The complexity of the models often times requires considerable time for calculations to converge to an output. The complexity of the models also results in lengthy and costly development.

### BRIEF DESCRIPTION OF THE INVENTION

According to one aspect of the example embodiment, a method of modeling a power plant including a plurality of major components including at least one of a Heat recovery Steam Generator (HRSG), a steam turbomachine, a condenser, and a cooling system includes establishing a desired power plant output criteria, selecting a plurality of major components to form the power plant, running a model module to create thermodynamic model of the major components to form a power plant model, running an equation module to develop a set of equations for the power plant model, running a performance module to solve the set of equations for the power plant model, running a cost module to determine a cost of the power plant model, determining whether the power plant model meets the desired power plant output criteria, and generating a result that indicates the performance and cost of the power plant model.

According to another aspect of the example embodiment, a method of modeling a power plant including a plurality of major components including at least one of a Heat recovery Steam Generator (HRSG), a steam turbomachine, a condenser, and a cooling system includes establishing a desired power plant output criteria, generating a power plant model including at least two of the plurality of major components to form the power plant, running a model module to create a thermodynamic model of the power plant model, running an equation module to develop a set of equations for the thermodynamic model of the power plant model, running a performance module to solve the set of equations for the thermodynamic model of the power plant model, running a cost module to determine a cost of the power plant model, determining whether the power plant model meets the desired power plant output criteria, and generating a result that indicates the performance and cost of the power plant model.

According to yet another aspect of the example embodiment, a power plant modeling system including a central processing unit (CPU), the CPU being interconnected functionally via a system bus to an input/output (I/O) adapter connecting to at least one of a removable data storage device, a program storage device, and a mass data storage device, a user interface adapter connecting to one or more computer input devices, a display adapter connecting to a display device, and at least one memory device thereupon stored a set of instructions which, when executed by the CPU, causes the system to receive through the user interface adapter a desired power plant output criteria, select a plurality of major components to form the power plant, run a model module to create thermodynamic models of each of the major components, run an equation module to develop a set of equations for each of the thermodynamic models of the major components, run a performance module to solve the set of equations for each of the thermodynamic models of the major components, run a cost module to determine a cost of the major components of the power plant, determine whether the major components meet the desired power plant OUTPUT criteria, and generate a result that indicates the performance and cost of the power plant.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram illustrating components of a power plant constructed using a power plant modeling system in accordance with an example embodiment;
FIG. 2 is flow diagram illustrating a method of modeling power plants employing the power plant modeling system in accordance with the example embodiment;
FIG. 3 is a block diagram illustrating a global subsystem selection in accordance with an example embodiment;
FIG. 4 is a flow diagram illustrating a performance module portion of the power plant modeling system in accordance with the example embodiment; and
FIG. 5 is a block diagram illustrating a general purpose computer capable of performing the method of modeling a power plant in accordance with an example embodiment.

The detailed description explains embodiments of the invention, together with advantages and features, by way of example with reference to the drawings.

### DETAILED DESCRIPTION OF EMBODIMENTS OF THE INVENTION

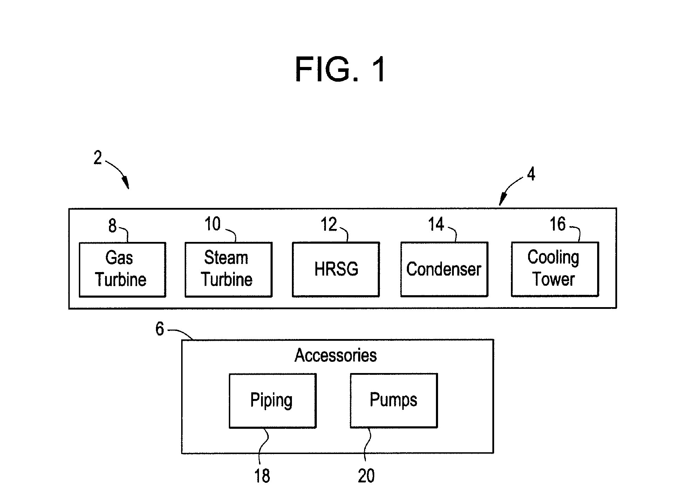

With reference to FIG. 1, a power plant constructed in accordance with an example embodiment is indicated generally at 2. Power plant 2 includes a plurality of major components 4 and a plurality of accessories 6. Major components include, for example, a gas turbine 8, a steam turbine 10 a heat recovery steam generator (HRSG) 12, a condenser 14, and a cooling tower 16. Accessories 6 include, for example, piping 18 and pumps 20 that direct and guide fluid between various ones of major components 4. At this point it should be understood that the particular connections and relative positioning of major components 4 and accessories 6 can vary. Major components 4 have been selected, modeled, and shown to meet desired output parameters by a method and system for modeling power plants as will be described more fully below.

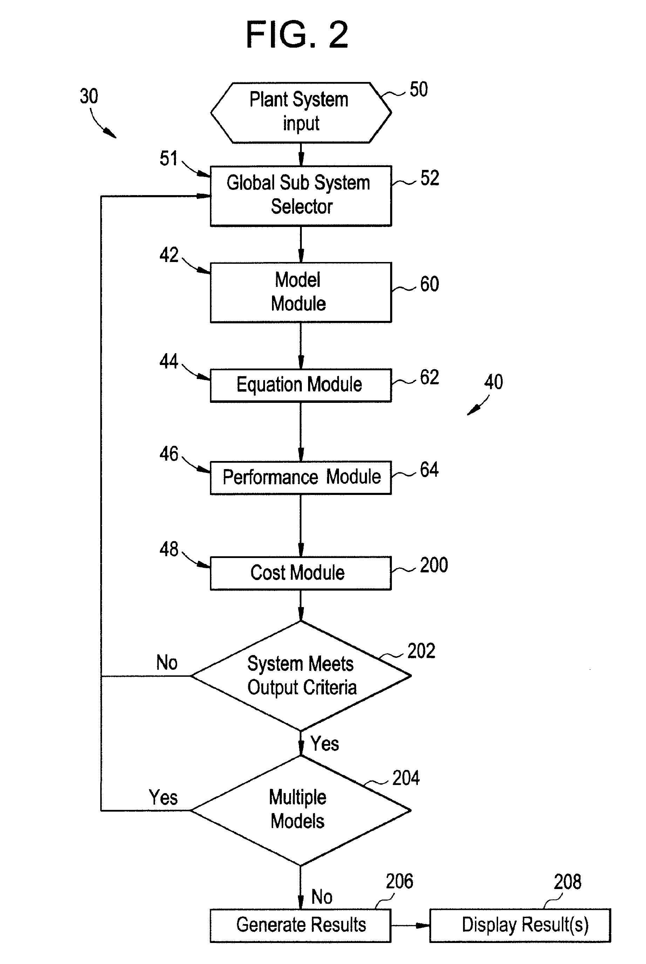

As best shown in FIG. 2, a method for modeling power plants is indicated generally at 30. Method 30 employs a power plant modeling system 40 that evaluates various component configurations to determine which combination of major components 4 meets a customers desired output criteria including power output, efficient, cost and the like. Power plant modeling system 40 includes a model module 42 that creates thermodynamic models for the major component under evaluation, an equation module 44 that automatically creates mathematical equations that represent the thermodynamic models from the model module, a performance module 46 that solves the thermodynamic models created by the equation module, and a cost module 48 that determines various costs associated with the power plant formed from the major components selected from model module 42 based on user input.

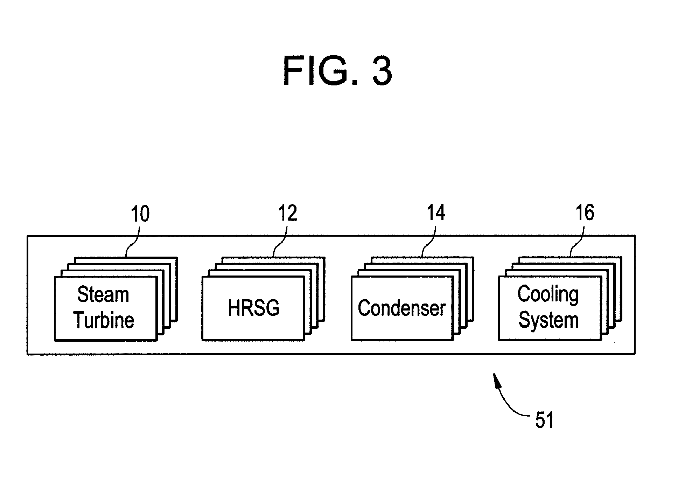

In accordance with an example embodiment, a user initially inputs a desired power plant output criteria as indicated in block 50. A group of major components including, for example, steam turbine 10, HRSG 12, condenser 14, and cooling system 16 are selected from groups of possible major components by a global subsystem selector 51 as indicated in block 52. As indicated in FIG. 3, global subsystem selector includes a database of various available major components that can be combined to form a power plant. The selected models are analyzed automatically without any manual intervention to arrive at an advantageous power plant design. At this point, the selected major components are passed to model module 42 in block 60 at which time model module 42 develops a power plant model. More specifically, model module 42 creates a thermodynamic model of the selected major components. The thermodynamic model is then passed to the equation module in block 62 to be converted into a mathematical equation and the mathematical equation is passed to performance module 46 as indicated in block 64.

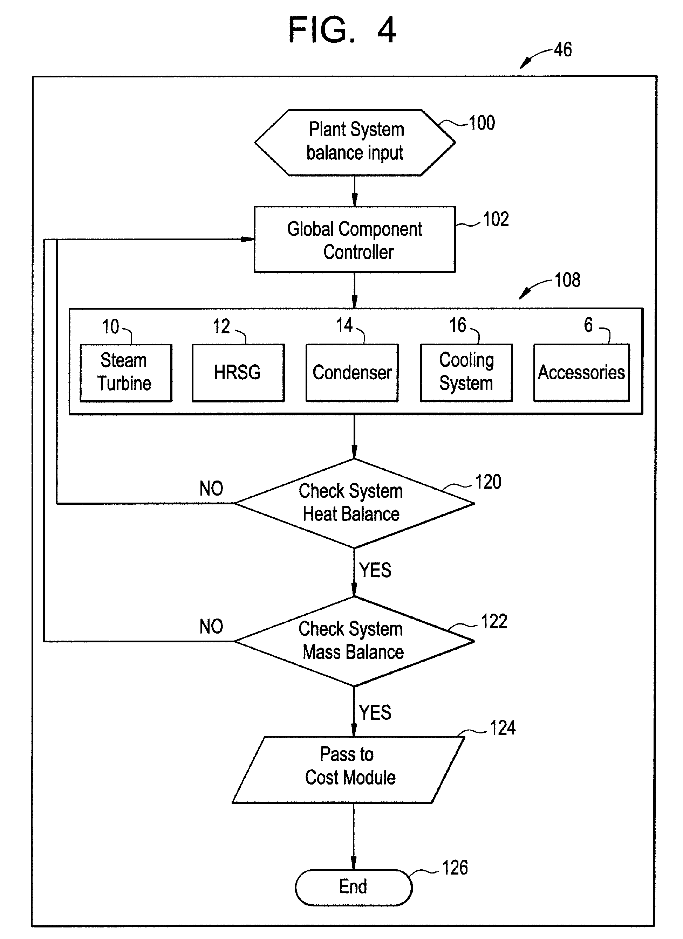

As indicated in FIG. 4, performance module 46 initially receives the mathematical equation representing the thermodynamic model of the selected major components in block 100. The equation is passed to a global component controller in block 102 that selects a set of performance characteristics, e.g., piping sizing, pump flows, and the like for major components 10, 12, 14, and 16 of power plant 2 as indicated in block 108. Performance module 46 then checks system heat balance in block 120. If the heat balance is unacceptable, the global component controller adjusts the performance characteristics in block 108. If the heat balance is acceptable, performance module 46 checks mass balance of the system as indicated in block 122. In a manner similar to that described above, if mass balance is not acceptable, the global component controller adjusts the performance characteristics in block 108, and heat and mass balance is rechecked. Once heat and mass balance is acceptable, performance module 46 passes the performance characteristics to cost module 48 as indicated in block 124 and ends in block 126.

Cost module 48 evaluates the performance characteristics, piping size, diameter, length, pump(s) sizing, as well as the over all cost of each major component to determine a roll out cost, or an end cost of power plant 2. After determining an end cost for the modeled power plant, method 30 compares modeled plant output with the desired output criteria to determine whether the power plant model is an acceptable power plant model, i.e., the power plant model meets the desired output criteria as indicated in block 202. If the modeled plant output does not meet the desired output criteria, new major components are selected and a new power plant model is developed. In accordance with one aspect of the example embodiment, if the power plant model does meet the desired output criteria, a determination is made whether additional power plant models may also meet the desired output criteria as indicated in block 204. If no additional models meet the desired criteria, or if no additional modeling is desired, method 30 generates a result representing the acceptable power plant model as indicated in block 206 and the result is displayed in block 208. If additional power plant models are found acceptable, method 30 presents each acceptable power plant model in blocks 206 and 208. The technical effect of the present invention provides a system for more readily modeling a power plant by analyzing properties of multiple system components not only individually, but also synergistically to provide a desired output.

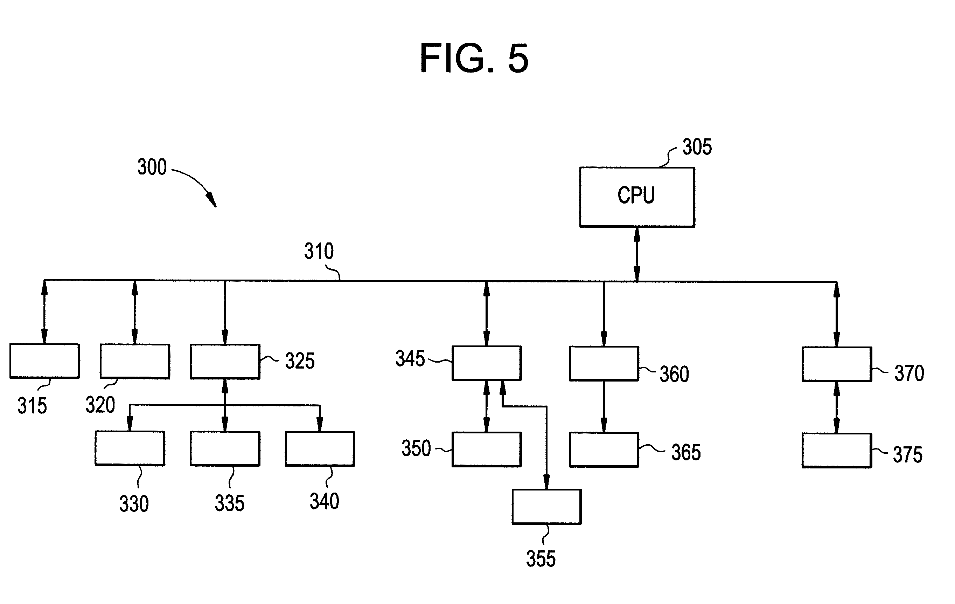

Figure 5 is a schematic block diagram of a general-purpose computer suitable for practicing the present invention embodiments. In Figure 5, computer system 300 has at least one microprocessor or central processing unit (CPU) 305. CPU 305 is interconnected via a system bus 310 to a random access memory (RAM) 315, a read-only memory (ROM) 320, an input/output (I/O) adapter 325 for a connecting a removable data 330 a program storage device 335 and a mass data and/or program storage device 340, a user interface adapter 345 for connecting a keyboard 350 and a mouse 355, a port adapter 360 for connecting a data port 365 and a display adapter 370 for connecting a display device 375.

At this point it should be understood that the example embodiments describe a method and system for evaluating power plant models. The method and system compares evaluates various power plant models to determine acceptability of achieving a desired output criteria. The technical effect of the example embodiments creates a system that employs a variety of modules to evaluate system performance and cost based on complex thermodynamic equations that represent a particular power plant model to determine whether a particular model can meet desired output criteria in a timely and cost efficient manner.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method (30) of modeling a power plant (2) including a plurality of major components (4) including at least one of a Heat Recovery Steam Generator (HRSG) (12), a steam turbomachine, a condenser (14), and a cooling system, the method (30) comprising:
establishing a desired power plant (2) output criteria;
selecting a plurality of major components (4) to form the power plant (2);
running a model module (42) to create thermodynamic model of the major components (4) to form a power plant (2) model;
running an equation module (44) to develop a set of equations for the power plant (2) model;
running a performance module (46) to solve the set of equations for the power plant (2) model;
running a cost module (48) to determine a cost of the power plant (2) model;
determining whether the power plant (2) model meets the desired power plant (2) output criteria; and
generating a result that indicates a performance and cost of the power plant (2) model.

2. The method (30) of claim 1, wherein the performance module (46) determines at least one of a power output, a fuel consumption, state points, and efficiency of the power plant (2).

3. The method (30) of claim 1 or claim 2, wherein the cost module (48) also determines accessory costs including costs for piping (18), and costs for pumps (20) for the power plant (2).

4. The method (30) of claim 1, 2 or 3, further comprising: selecting another plurality of major components (4) to form the power plant (2) if the plurality of major components (4) previously selected fail to meet the desired power plant (2) output criteria.

5. The method (30) of claim 4, further comprising: evaluating the another plurality of major components (4) with each of the performance module (46), and cost module (48).

6. The method (30) of claim 5, further comprising: generating a result that indicates the performance and cost of the power plant (2) formed from the another plurality of major components (4).

7. The method of any one of claims 1 to 6, comprising:
establishing a desired power plant output criteria;
generating a power plant model including at least two of the plurality of major components (4) to form the power plant (2);
running a model module (42) to create a thermodynamic model of the power plant model;
running an equation module (44) to develop a set of equations for the thermodynamic model of the power plant model;
running a performance module (46) to solve the set of equations for the thermodynamic model of the power plant model;
running a cost module (48) to determine a cost of the power plant model;
determining whether the power plant model meets the desired power plant output criteria; and
generating a result that indicates a performance and cost of the power plant model.

8. A power plant modeling system including a central processing unit (CPU), the CPU (305) being interconnected functionally via a system bus (310) to:
an input/output (I/O) adapter (325) connecting to at least one of a removable data storage device, a program storage device, and a mass data storage device;
a user interface adapter (345) connecting to one or more computer input devices;
a display adapter (370) connecting to a display device (375); and
at least one memory device thereupon stored a set of instructions which, when executed by the CPU, causes the system to perform the method of any one of claims 1 to 7.

9. The power plant modeling system according to claim 8, wherein the set of instructions when executed by the CPU (305), causes the system to: determine at least one of a power output, a fuel consumption, state points, and efficiency of the power plant in the performance module.

10. The power plant modeling system according to claim 8 or claim 9, wherein the set of instructions when executed by the CPU (305), causes the system to: determine roll out cost of the power plant (2) in the cost module (48).

11. The power plant modeling system according to claim 8, 9 or 10, wherein the set of instructions when executed by the CPU (305), causes the system to: determine accessory costs including piping costs, and cost of pumps for the power plant (2) in the cost module.

12. The power plant modeling system according to claim 8, 9, 10 or 11, wherein the set of instructions when executed by the CPU (305), causes the system to: select another plurality of major components to form the power plant (2) if the plurality of major components previously selected fail to meet the desired power plant output criteria.

13. The power plant modeling system according to claim 12, wherein the set of instructions when executed by the CPU (305), causes the system to: evaluate the another plurality of major components with each of the performance module (46), and cost module (48).

14. The power plant modeling system according to claim 13, wherein the set of instructions when executed by the CPU (305), causes the system to: generate a result that indicates the performance and cost of the power plant (2) formed from the another plurality of major components.

15. The power plant modeling system according to claim 14, wherein the set of instructions when executed by the CPU (305), causes the system to: present the result on the display device (375).
